# EUROPÄISCHE PATENTSCHRIFT

(11) **EP 1 793 173 B1**
(45) Veröffentlichungstag und Bekanntmachung des Hinweises auf die Patenterteilung: **01.10.2008**
(21) Anmeldenummer: 06024910.9
(22) Anmeldetag: 01.12.2006
(51) Int. Cl.: F24C 7/08

(54) **Verfahren zum Führen eines Garprozesses mit einem Mehrpunkttemperatursensor**
Method for controlling a cooking process with a multi-point temperature probe
Méthode de commande d'un processus de cuisson à l'aide d'un capteur de temperature multipoints

(30) Priorität: 02.12.2005 DE 102005057884
(43) Veröffentlichungstag der Anmeldung: 06.06.2007
(73) Patentinhaber: Rational AG, 86899 Landsberg/Lech (DE)
(72) Erfinder: Sterzel, Roland Dr., 60437 Frankfurt am Main (DE)
(74) Vertreter: Weber-Bruls, Dorothée

(56) Entgegenhaltungen:
- WO-A-02/23093
- WO-A-02/47522
- WO-A-93/16333
- DE-A1- 10 306 940

## Beschreibung

Die vorliegende Erfindung betrifft ein Verfahren zum Führen eines Garprozesses mit einem Mehrpunkttemperatursensor, der eine Einführspitze mit n längs der Einführspitze voneinander beabstandeten Temperatursensoren umfaßt und mit seiner Einführspitze derart zumindest teilweise in ein Gargut, das in einem Garraum zu garen ist, eingeführt wird, daß m Temperatursensoren im Gargut und n-m Temperatursensoren außerhalb des Garguts plaziert sind, mit m≤ n, m ≠ 0, n ≠ 0, n ∈ |N und m ∈ |N, wobei durch Auswertung von Ausgabedaten der n Temperatursensoren zumindest die Kerntemperatur T_{K} des Garguts bestimmt und/oder angezeigt wird, wobei das Verfahren zumindest eine erste Garphase umfaßt, während der eine Temperatur T_{G} im Garraum oberhalb zumindest einer Temperatur des Garguts liegt und die m Temperatursensoren des Mehrpunkttemperatursensors im Gargut und/oder der Temperatursensor des Mehrpunkttemperatursensors, der die niedrigste Temperatur im Gargut mißt, bestimmt wird bzw. werden, um in Abhängigkeit von Ausgabedaten der so bestimmten Temperatursensoren bzw. des so bestimmten Temperatursensors den Garprozeß zu führen.

Ein Mehrpunkttemperatursensor bzw. Garprozeßfühler zum Durchführen eines gattungsgemäßen Verfahrens mit mehreren Temperatursensoren in einer Spitze des Garprozeßfühlers und wenigstens einem Temperatursensor in einem Griffstück des Garprozeßfühlers ist beispielsweise aus der DE 199 45 021 A1 oder DE 103 06 940 A1 bekannt. Danach läßt sich beim Garen insbesondere die Kerntemperatur eines Garguts aus der Kinematik, also dem zeitlichen Verlauf, von in einem Gargut mittels eines Garprozeßfühlers erfaßten Temperaturwerten genau bestimmen, selbst bei nicht exakt positioniertem Garprozeßfühler, um ein kerntemperaturgesteuertes Garprogramm erfolgreich durchführen zu können. Da jedoch eine Fehlstechung eines Garprozeßfühlers zu mangelhaften Garergebnissen führen kann, ist die Erkennung der Setzung des Garprozeßfühlers im Gargut von Bedeutung. So ist in der DE 100 61 821A1 beschrieben, daß nur bei erkannter korrekter Stechung eines Garprozeßfühlers in ein Gargut ein Garprogramm initiiert wird.

Auch aus der WO 02/23093 A1 ist ein gattungsgemäßes Verfahren unter Einsatz eines Mehrpunkttemperatursensors bekannt, bei dem die niedrigste in einem Gargut mittels einer Vielzahl von Temperatursensoren erfaßte Temperatur als Kerntemperatur betrachtet wird.

Bei dem derzeitigen Stand der Technik wird also die Kerntemperatur eines Garguts im wesentlichen dadurch über einen Garprozeßfühler mit einer Vielzahl von Thermoelementen als Temperatursensoren bestimmt, daß entweder die niedrigste von einem Thermoelement auf einer Einführspitze des Garprozeßfühlers erfaßte Temperatur ausgewählt oder aber in Abhängigkeit von zwischen den über besagte Thermoelemente erfaßten Ausgabedaten bzw. Temperaturwerten bestimmten Temperaturgradienten eine Extrapolation oder Iteration durchgeführt wird. Dies führt solange zu erwünschten Garergebnissen, wie die Temperatur im Gargut nicht oberhalb der mittleren Garraumtemperatur liegt. Bei vielen Garverfahren wird jedoch der Garraum während des Garens abgekühlt, wie beispielsweise bei einem Über-Nacht-Braten, bei dem eine Abkühlung des Garraums zum Konstant-Halten der Kerntemperatur im Gargut notwendig sein kann, oder bei einem Garraumatmosphärenaustausch durch Ansaugung von Frischluft und/oder dem Einspritzen von kühlem Frischwasser in den Garraum. Aber auch beim Entfeuchten der Atmosphäre im Garraum kann es zu einer Abkühlung der Garraumtemperatur unter die Temperatur des Garguts kommen, indem nämlich Frischluft von außerhalb des Gargerätes in den Garraum eingesaugt wird. Ist während solch einer Abkühlphase ein Thermoelement des Garprozeßfühlers bzw. des Mehrpunkttemperaturfühlers außerhalb des Garguts angeordnet, so mißt dieser eine Temperatur, die unter der des Garguts, insbesondere unterhalb der Kerntemperatur des Garguts, liegt, so daß es dann zu einer falschen Bestimmung der Kerntemperatur und somit bei kerntemperaturgesteuerten Garverfahren zu unzufriedenstellenden Garergebnissen kommen kann. Zudem kann es dadurch bei der Aufzeichnung der Daten der Temperatur des Garguts zur Hygiene-Kontrolle der sogenannten "Hazard Analysis of Critical Control Points" (HACCP) zu unerwünschten und verwirrenden Artefakten kommen. Die Temperatursensoren des Garprozeßfühlers werden bei dem derzeitigen Stand der Technik nur zum Bestimmen eines Temperaturanstiegs sinnvoll ausgewertet und für die Garprozeßsteuerung berücksichtigt.

Aufgabe der vorliegenden Erfindung ist es daher, daß gattungsgemäße Verfahren derart weiterzuentwickeln, daß die Nachteile des Stands der Technik überwunden werden.

Diese Aufgabe wird erfindungsgemäß, dadurch gelöst, daß das Verfahren zudem zumindest eine zweite Garphase nach der ersten Garphase umfaßt, während der die Temperatur T_{G} im Garraum unter eine Temperatur des Garguts fällt und zum Führen und/oder Anzeigen des Garprozesses Ausgabedaten der in der ersten Garphase bestimmten m Temperatursensoren des Mehrpunkttemperatursensors im Gargut oder des in der ersten Garphase bestimmten Temperatursensors des Mehrpunkttemperatursensors, der die niedrigste Temperatur im Gargut mißt, ausgewertet werden oder wird.

Dabei kann vorgesehen sein, daß die Temperatur T_{G} des Garraums in der ersten Garphase oberhalb der Kerntemperatur T_{K} des Garguts liegt und/oder in der zweiten Garphase unter die Kerntemperatur T_{K} des Garguts fällt, wobei die Temperatur T_{G} des Garraums vorzugsweise durch die mittlere Garraumtemperatur bestimmt wird.

Ferner kann vorgesehen sein, daß aus den Ausgabedaten der m Temperatursensoren oder des Temperatursensors, der die niedrigste Temperatur im Gargut mißt, die Kerntemperatur T_{K} zur Berechnung zumindest eines Garparameters, insbesondere der Gardauer, bestimmt wird.

Auch wird vorgeschlagen, daß zumindest in der ersten Garphase die Ausgabedaten der n Temperatursensoren des Mehrpunkttemperatursensors über die Zeit erfaßt werden, insbesondere zur Bestimmung der m Temperatursensoren im Gargut und/oder des Temperatursensors, der die niedrigste Temperatur im Gargut mißt, und/oder der Kerntemperatur T_{K}.

Bevorzugt ist erfindungsgemäß, daß zumindest in der zweiten Garphase die Ausgabedaten zumindest des Temperatursensors, der die niedrigste Temperatur im Gargut in der ersten Garphase mißt, vorzugsweise der m in der ersten Garphase als im Gargut angeordnet bestimmten Temperatursensoren, über die Zeit erfaßt werden, insbesondere zur Bestimmung zumindest eines Garparameters, vorzugsweise der Kerntemperatur T_{K} und/oder der Gardauer.

Ferner kann vorgesehen sein, daß über das zeitliche Verhalten der Ausgabewerte der m in der ersten Garphase als im Gargut angeordnet bestimmten Temperatursensoren die Kerntemperatur T_{K}, insbesondere über eine Iteration oder Extrapolation, bestimmt wird.

Dabei kann vorgesehen sein, daß die Iteration oder Extrapolation zur Bestimmung der Kerntemperatur solange vorgenommen wird, wie der daraus bestimmte Wert der Kerntemperatur um mehr als 1% von dem niedrigsten der über die m Temperatursensoren im Gargut bestimmten Ausgabedaten abweicht.

Es kann vorgesehen sein, daß der Temperatursensor, der die niedrigste Temperatur mißt, bestimmt wird, wenn die Temperatur von zumindest n-1 Temperatursensoren in der ersten Garphase ansteigt.

Es kann ferner vorgesehen sein, daß beim Garen von Fleisch, Fisch oder Gemüse in der ersten Garphase der Temperatursensor bestimmt wird, der die niedrigste Temperatur mißt.

Auch wird mit der Erfindung vorgeschlagen, daß beim Garen von Gebäck oder Backwaren, insbesondere Brötchen, in der ersten Garphase die m im Gargut angeordneten Temperatursensoren bestimmt werden, insbesondere dadurch, daß die Ausgabedaten zu Temperaturen unter 100 °C führen.

Mit der Erfindung wird ferner vorgeschlagen, daß die n-m Temperatursensoren, die außerhalb des Garguts plaziert sind, zur Bestimmung der Temperatur in der Nähe der Oberfläche T_{O} des Garguts ausgewertet werden.

Dabei kann vorgesehen sein, daß die zweite Garphase bei Unterschreiten eines Grenzwerts der Temperatur in der Nähe der Oberfläche T_{O} des Garguts beendet wird.

Mit der Erfindung wird ferner vorgeschlagen, daß der zweiten Garphase eine dritte Garphase folgt, bei der die Garraumtemperatur T_{G} über die Temperatur des Garguts steigt.

Dabei kann vorgesehen sein, daß die Garraumtemperatur T_{G} in der dritten Garphase über die Kerntemperatur T_{K} und/oder die Oberflächentemperatur T_{O} des Garguts steigt.

Auch wird mit der Erfindung vorgeschlagen, daß die Garraumtemperatur T_{G} während der zweiten Garphase zur Bestimmung der Kerntemperatur T_{K} des Garguts in einer Zwischengarphase erhöht wird.

Dabei kann vorgesehen sein, daß nach der Bestimmung der Kerntemperatur T_{K} des Garguts in der Zwischengarphase das Garverfahren wieder in der zweiten Garphase betrieben wird.

Ferner kann vorgesehen sein, daß die Garraumtemperatur T_{G} in der Zwischengarphase zumindest über eine zu erreichende Sollkerntemperatur erhöht wird.

Auch wird vorgeschlagen, daß die Garraumtemperatur T_{G} in der Zwischengarphase für einige Zeit zumindest so stark erhöht wird, daß sichergestellt werden kann, daß die Temperaturen der n-m Temperatursensoren, die außerhalb des Garguts plaziert sind, über der Temperatur des kältesten der m Temperatursensoren innerhalb des Garguts liegen.

Bevorzugt ist erfindungsgemäß, daß die Kerntemperatur T_{K} des Garguts in der dritten Zwischengarphase durch Bestimmen der niedrigsten Temperatur aller n Temperatursensoren der Einführspitze bestimmt wird.

Weiterhin wird mit der Erfindung vorgeschlagen, daß die Kerntemperatur T_{K} des Garguts nur dann zur Regelung eines Garprogramms verwendet wird und/oder zum Aufzeichnen verwendet wird und/oder angezeigt wird, wenn sichergestellt ist, daß der kälteste Temperatursensor der Einführspitze einer der m im Gargut plazierten Temperatursensoren ist.

Schließlich kann vorgesehen sein, daß über einen weiteren Sensor in oder an einem Griffstück des Mehrpunkttemperatursensors die Garraumtemperatur T_{G} oder die Temperatur T_{K} der oder nahe der Oberfläche des Garguts erfaßt wird, die vorzugsweise beim Führen des Garprozesses berücksichtigt wird.

Der Erfindung liegt somit die überraschende Erkenntnis zugrunde, daß die Kerntemperatur eines Garguts auch beim Abkühlen und/oder Entfeuchten eines Garraums, in dem das Gargut angeordnet ist, richtig bestimmt werden kann, um auf der Grundlage derselben ein Garverfahren derart führen zu können, daß das Garergebnis zufriedenstellend ist, insbesondere Hygienebedingungen erfüllt sind und/oder HACCP-Protokolle korrekt aufgezeichnet werden können, und die Temperatur an der Oberfläche des Garguts T_{O} mit Hilfe von außerhalb des Garguts liegenden Temperatursensoren bestimmt werden kann. Zu diesem Zweck wird erfindungsgemäß beispielsweise beim Garen von Fleisch, Fisch oder Gemüse in einer ersten Garphase, in der die Garraumtemperatur, insbesondere die mittlere Garraumtemperatur, oberhalb einer Garguttemperatur, insbesondere der Kerntemperatur, liegt, der Temperatursensor eines Mehrpunkttemperatursensors ausgewählt, der die niedrigste Temperatur mißt, um in sich anschließenden Garphasen, insbesondere während einer zweiten Garphase, in der die Garraumtemperatur, insbesondere die mittlere Garraumtemperatur, unterhalb der Garguttemperatur, insbesondere der Kerntemperatur, liegt, zur Bestimmung der Kerntemperatur herangezogen zu werden. Beim Garen von Backwaren, insbesondere von Gebäck, muß zudem berücksichtigt werden, daß der kälteste Punkt im Gebäck, also der Kernpunkt, nicht ortsfest ist, weshalb in der ersten Garphase all die Temperatursensoren erfindungsgemäß zu bestimmen sind, die in dem Gebäck liegen, so daß in den darauffolgenden Garphasen, umfassend die zweite Garphase, die Kerntemperatur nur durch Auswertung dieser Temperatursensoren bestimmt wird, so daß sich kerntemperaturgeführte Garverfahren zufriedenstellend durchführen lassen. Das Abkühlen und/oder Entfeuchten des Garraums kann dabei solange fortgeführt werden, bis ein Temperatursensor außerhalb des Garguts einen vorgegebenen Wert unterschreitet. Durch diesen Temperatursensor kann die Temperatur in der Nähe der Oberfläche des Garguts bestimmt werden. Diese Temperatur ist maßgeblich für die vorherrschenden klimatischen Bedingungen am Gargut.

Ebenso kann auch während der Abkühlphase die Temperatur des Garraums kurzzeitig erhöht werden, um auch bei Auswertung der niedrigsten Temperatur auf der Fühlernadel einen korrekten Wert für die Kerntemperatur des Garguts zu erhalten. Dazu muß sichergestellt sein, daß die Garraumtemperatur zumindest über der kältesten Temperatur im Garraum liegt. Zusätzlich muß sichergestellt sein, daß eine solche Temperatur auch an den außerhalb des Garguts liegenden Temperatursensoren auf der Fühlernadel anliegt. Dazu muß gegebenenfalls eine Ausgleichszeit abgewartet werden, in der nicht nur die Wärmeübertragung des Gargeräts und die Wärmeflüsse in der Fühlernadel berücksichtigt werden müssen, sondern auch eine Isolationswirkung des Garguts auf die Fühlernadel in unmittelbarer Umgebung der Gargutoberfläche. Die Ausgleichzeit liegt bei herkömmlichen Gargeräten im Bereich von höchstens wenigen Minuten.

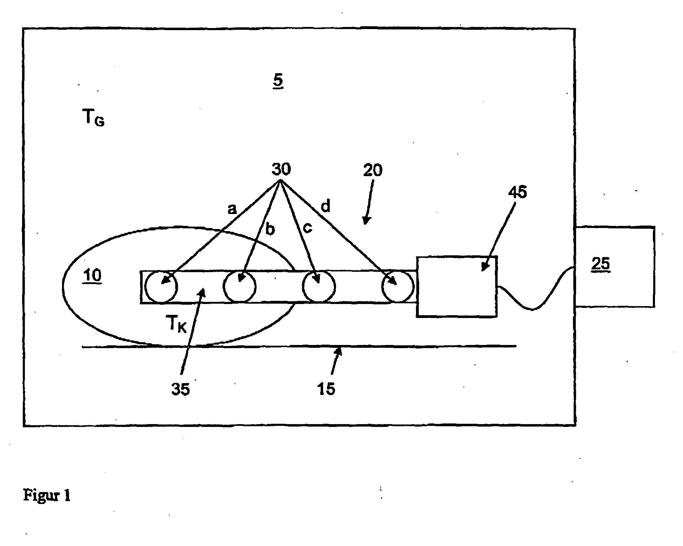

Weitere Merkmale und Vorteile der Erfindung ergeben sich aus der nachfolgenden Beschreibung eines Ausführungsbeispieles derselben anhand einer aus einer einzigen Figur bestehenden Zeichnung. Die Figur zeigt dabei schematisch ein Gargerät zur Durchführung eines erfindungsgemäßen Verfahrens.

Wie der Figur zu entnehmen ist, ist in einem Garraum 5 eines nicht weiter gezeigten Gargeräts ein Gargut 10, beispielsweise ein Brötchen, auf einem Gargutträger 15 angeordnet, in dem wiederum ein Mehrpunkttemperatursensor 20 angeordnet ist. Dieser Mehrpunkttemperatursensor 20 ist mit einer Regeleinheit 25 verbunden und weist n=4 Temperatursensoren 30 innerhalb einer Einführspitze 35 auf, von denen zwei im Gargut 10 und zwei außerhalb des Garguts 10 angeordnet sind. Die Einführspitze 35 läßt sich mit Hilfe eines Griffstücks 45 des Mehrpunkttemperatursensors 20 bequem in das Gargut 10 einstechen. Das Griffstück 45 ist dabei so ausgeformt, daß es unter normalen Bedingungen nicht möglich ist, den Mehrpunkttemperatursensor 20 mitsamt dem Griffstück 45 in das Gargut 10 einzustechen.

Diese Plazierung des Mehrpunkttemperatursensors 20 im Gargut 10 wird in einem erfindungsgemäßen Verfahren in einer ersten Garphase, in der die mittlere Garraumtemperatur T_{G} oberhalb der Kerntemperatur T_{K} des Garguts 10 liegt, bestimmt, nämlich durch Auswertung der Ausgabewerte der vier Temperatursensoren 30 über die Zeit, zwecks Berücksichtigung der Garungskinetik im Gargut. Nach Abschluß der ersten Garphase werden erfindungsgemäß nur noch die Ausgabewerte der beiden im Gargut erfaßten Temperatursensoren 30a, 30b zur Bestimmung der Kerntemperatur T_{K} herangezogen, um ein kemtemperaturgeführtes Garverfahren erfolgreich abzuschließen. Die Auswahl der Temperatursensoren 30 hängt dabei von der Temperatur T_{G} des Garraums 5 und von der Garungskinetik des Garguts 10 in der ersten Garphase ab. Ist die Temperatur T_{G} des Garraums 5 z.B. deutlich über 100 °C, z.B. 150 °C, können die außerhalb des Garguts 10 gelegenen Temperatursensoren 30c, 30d dadurch identifiziert werden, daß deren Temperatursignale über 100 °C anzeigen. Die Auswahl der innerhalb des Garguts 10 plazierten Temperatursensoren 30a, 30b kann so automatisch durch die Regeleinheit 25 durchgeführt werden.

Alternativ kann auch nur der Temperatursensor 30a, der in der ersten Garphase die niedrigste Temperatur ausgibt, ausgewählt werden. Dies ist nur dann sinnvoll, wenn der kälteste Punkt ortsfest bleibt, was allerdings zum Beispiel bei Gebäck nicht der Fall sein muß, und sich bereits ein ausreichender Temperaturgradient im Gargut 10 ausgebildet hat. Ein geeigneter Temperaturgradient liegt dann vor, wenn die von außen in das Gargut 10 eindringende Wärmeenergie im Bereich der Einführspitze 35 des Mehrpunkttemperatursensors innerhalb der ersten Garphase zu einem Anstieg der Temperatur an n-1=3 Temperatursensoren 30 geführt hat. Die Ausbildung eines geeigneten Temperaturgradienten hängt dabei von den Abmessungen und der Beschaffenheit des Garguts 10, von der Temperatur des Garraums T_{G} und von der Dauer der ersten Garphase ab. Bei Umluftgeräten mit Dampfgenerator hat die Luftgeschwindigkeit im Garraum 5 und die Garraumatmosphäre einen zusätzlichen Einfluß auf die Ausbildung des Temperaturgradienten im Gargut.

Während einer späteren Abkühlphase werden dann nur die Temperatursensoren 30a, 30b, die von der Regeleinheit 25 als innerhalb des Garguts 10 liegend identifiziert worden sind, oder der Temperatursensor 30a mit der niedrigsten Temperatur zur Bestimmung der Temperatur T_{K} des Garguts 10 berücksichtigt. Um das Gargut 10 möglichst schonend zu behandeln und gleichzeitig den Garprozeß möglich zeitsparend zu gestalten, wird der Garraum 5 dabei so lange abgekühlt, bis eine voreingestellte Temperatur am Gargut 10 erreicht wird. Dazu können die Ausgabedaten der außerhalb des Garguts 10 plazierten Temperatursensoren 30c, 30d ausgewertet werden.

Die Speicherung der Ausgabedaten der beiden Temperatursensoren 30a und 30b während der ersten Garphase kann umgangen werden, wenn während der zweiten Garphase, bei der der Garraum 5 unter die Temperatur des Garguts 10 abgekühlt wird, Zwischenphasen eingeschoben werden, während denen die Garraumtemperatur T_{G} kurzfristig erhöht wird. Nach einer kurzen Zeit (Ausgleichzeit), werden die entstehenden Wärmeflüsse dann die Temperatursensoren 30c und 30d erwärmen. Durch die Erwärmung dieser Sensoren ist dann wieder der Temperatursensor (zum Beispiel 30a) im Gargut 10 der kälteste auf der gesamten Einführspitze 35. Der Vorteil hierbei ist, daß die Auswertung der Temperatursensoren 30a, 30b, 30c und 30d immer nach demselben Verfahren stattfinden kann, nämlich der kälteste Temperatursensor (zum Beispiel 30a) definiert die Kerntemperatur des Garguts 10. Zum Aufzeichnen und Anzeigen der Kerntemperaturdaten muß dann allerdings immer der Moment abgewartet werden, während dem sichergestellt ist, daß die Temperatursensoren 30c und 30d eine höhere Temperatur aufweisen als der kälteste Temperatursensor (zum Beispiel 30a) im Gargut 10. Ebenso muß verfahren werden, wenn ein Garprogramm aufgrund der Kerntemperatur von der Regeleinheit 25 gesteuert werden soll.

Die in der voranstehenden Beschreibung, den Ansprüchen sowie in der Zeichnung offenbarten Merkmale können sowohl einzeln als auch in jeder beliebigen Kombination für die Verwrirklichung der Erfindung in ihren verschiedenen Ausführungsformen wesentlich sein.

### Bezugseichenliste

- 5: Garraum
- 10: Gargut
- 15: Gargutträger
- 20: Mehrpunkttemperatursensor
- 25: Regeleinheit
- 30: Temperatursensoren in der Einführspitze
- 35: Einführspitze
- 45: Griffstück

## Patentansprüche

1. Verfahren zum Führen eines Garprozesses mit einem Mehrpunkttemperatursensor (20), der eine Einführspitze (35) mit n längs der Einführspitze (35) voneinander beabstandeten Temperatursensoren (30, 30a - 30d) umfaßt und mit seiner Einführspitze(35) derart zumindest teilweise in ein Gargut (10), das in einem Garraum (5) zu garen ist, eingeführt wird, daß m Temperatursensoren (30a, 30b) im Gargut (10) und n-m Temperatursensoren (30c, 30d) außerhalb des Garguts (10) plaziert sind, mit m≤ n, m ≠ 0, n ≠ 0, n ∈ |N und m ∈ |N, wobei durch Auswertung von Ausgabedaten der n Temperatursensoren (30, 30a - 30d) zumindest die Kerntemperatur T_{K} des Garguts (10) bestimmt und/oder angezeigt wird, wobei das Verfahren zumindest eine erste Garphase umfaßt, während der eine Temperatur T_{G} im Garraum (5) oberhalb zumindest einer Temperatur des Garguts (10) liegt und die m Temperatursensoren (30a, 30b) des Mehrpunkttemperatursensors (20) im Gargut (10) und/oder der Temperatursensor des Mehrpunkttemperatursensors, der die niedrigste Temperatur im Gargut mißt, bestimmt wird bzw. werden, um in Abhängigkeit von Ausgabedaten der so bestimmten Temperatursensoren (30a, 30b) bzw. des so bestimmten Temperatursensors den Garprozeß zu führen, **dadurch gekennzeichnet, daß** das Verfahren zudem zumindest eine zweite Garphase nach der ersten Garphase umfaßt, während der die Temperatur T_{G} im Garraum (5) unter eine Temperatur des Garguts (10) fällt und zum Führen und/oder Anzeigen des Garprozesses Ausgabedaten der in der ersten Garphase bestimmten m Temperatursensoren (30a, 30b) des Mehrpunkttemperatursensors (20) im Gargut (10) oder des in der ersten Garphase bestimmten Temperatursensors des Mehrpunkttemperatursensors (20), der die niedrigste Temperatur im Gargut mißt, ausgewertet werden oder wird.

2. Verfahren nach Anspruch 1, **dadurch gekennzeichnet, daß**
die Temperatur T_{G} des Garraums (5) in der ersten Garphase oberhalb der Kerntemperatur T_{K} des Garguts (10) liegt und/oder in der zweiten Garphase unter die Kerntemperatur T_{K} des Garguts (10) fällt, wobei die Temperatur T_{G} des Garraums (5) vorzugsweise durch die mittlere Garraumtemperatur bestimmt wird.

3. Verfahren nach Anspruch 1 oder 2, **dadurch gekennzeichnet, daß**
aus den Ausgabedaten der m Temperatursensoren (30a, 30b) oder des Temperatursensors, der die niedrigste Temperatur im Gargut mißt, die Kerntemperatur T_{K} zur Berechnung zumindest eines Garparameters, insbesondere der Gardauer, bestimmt wird.

4. Verfahren nach einem der vorangehenden Ansprüche, **dadurch gekennzeichnet, daß** zumindest in der ersten Garphase die Ausgabedaten der n Temperatursensoren (30, 30a - 30d) des Mehrpunkttemperatursensors (20) über die Zeit erfaßt werden, insbesondere zur Bestimmung der m Temperatursensoren (30a, 30b) im Gargut (10) und/oder des Temperatursensors, der die niedrigste Temperatur im Gargut mißt, und/oder der Kerntemperatur T_{K}.

5. Verfahren nach einem der vorangehenden Ansprüche, **dadurch gekennzeichnet, daß** zumindest in der zweiten Garphase die Ausgabedaten zumindest des Temperatursensors, der die niedrigste Temperatur im Gargut in der ersten Garphase mißt, vorzugsweise der m in der ersten Garphase als im Gargut (10) angeordnet bestimmten Temperatursensoren (30a, 30b), über die Zeit erfaßt werden, insbesondere zur Bestimmung zumindest eines Garparameters, vorzugsweise der Kerntemperatur T_{K} und/oder der Gardauer.

6. Verfahren nach Anspruch 4 oder 5, **dadurch gekennzeichnet, daß**
über das zeitliche Verhalten der Ausgabewerte der m in der ersten Garphase als im Gargut (10) angeordnet bestimmten Temperatursensoren (30a, 30b) die Kerntemperatur T_{K}, insbesondere über eine Iteration oder Extrapolation, bestimmt wird.

7. Verfahren nach Anspruch 6, **dadurch gekennzeichnet, daß**
die Iteration oder Extrapolation zur Bestimmung der Kerntemperatur solange vorgenommen wird, wie der daraus bestimmte Wert der Kerntemperatur um mehr als 1% von dem niedrigsten der über die m Temperatursensoren (30a, 30b) im Gargut (10) bestimmten Ausgabedaten abweicht.

8. Verfahren nach einem der vorangehenden Ansprüche, **dadurch gekennzeichnet, daß** der Temperatursensor, der die niedrigste Temperatur mißt, bestimmt wird, wenn die Temperatur von zumindest n-1 Temperatursensoren in der ersten Garphase ansteigt.

9. Verfahren nach einem der vorangehenden Ansprüche, **dadurch gekennzeichnet, daß** beim Garen von Fleisch, Fisch oder Gemüse in der ersten Garphase der Temperatursensor bestimmt wird, der die niedrigste Temperatur mißt.

10. Verfahren nach einem der vorangehenden Ansprüche, **dadurch gekennzeichnet, daß** beim Garen von Gebäck oder Backwaren, insbesondere Brötchen, in der ersten Garphase die m im Gargut (10) angeordneten Temperatursensoren (30a, 30b) bestimmt werden, insbesondere dadurch, daß die Ausgabedaten zu Temperaturen unter 100 °C führen.

11. Verfahren nach einem der vorangehenden Ansprüche, **dadurch gekennzeichnet, daß** die n-m Temperatursensoren (30c, 30d), die außerhalb des Garguts (10) plaziert sind, **zur** Bestimmung der Temperatur in der Nähe der Oberfläche T_{O} des Gargutes (10) ausgewertet werden.

12. Verfahren nach Anspruch 10 oder 11, **dadurch gekennzeichnet, daß**
die zweite Garphase bei Unterschreiten eines Grenzwerts der Temperatur in der Nähe der Oberfläche T_{O} des Garguts (10) beendet wird.

13. Verfahren nach einem der vorangehenden Ansprüche, **dadurch gekennzeichnet, daß**
der zweiten Garphase eine dritte Garphase folgt, bei der die Garraumtemperatur T_{G} über die Temperatur des Garguts (10) steigt.

14. Verfahren nach Anspruch 13, **dadurch gekennzeichnet, daß**
die Garraumtemperatur T_{G} in der dritten Garphase über die Kerntemperatur T_{K} und/oder die Oberflächentemperatur T_{O} des Garguts (10) steigt.

15. Verfahren nach einem der vorangehenden Ansprüche, **dadurch gekennzeichnet, daß**
die Garraumtemperatur T_{G} während der zweiten Garphase zur Bestimmung der Kerntemperatur T_{K} des Garguts (10) in einer Zwischengarphase erhöht wird.

16. Verfahren nach Anspruch 15, **dadurch gekennzeichnet, daß**
nach der Bestimmung der Kerntemperatur T_{K} des Garguts (10) in der Zwischengarphase das Garverfahren wieder in der zweiten Garphase betrieben wird.

17. Verfahren nach Anspruch 15 oder 16, **dadurch gekennzeichnet, daß**
die Garraumtemperatur T_{G} in der Zwischengarphase zumindest über eine zu erreichende Sollkerntemperatur erhöht wird.

18. Verfahren nach einem der vorangehenden Ansprüche, **dadurch gekennzeichnet, daß**
die Garraumtemperatur T_{G} in der Zwischengarphase für einige Zeit zumindest so stark erhöht wird, daß sichergestellt werden kann, daß die Temperaturen der n-m Temperatursensoren (30c, 30d), die außerhalb des Garguts (10) plaziert sind, über der Temperatur des kältesten der m Temperatursensoren (30a, 30b) innerhalb des Garguts (10) liegen.

19. Verfahren nach einem der vorangehenden Ansprüche, **dadurch gekennzeichnet, daß**
die Kerntemperatur T_{K} des Garguts (10) in der Zwischengarphase durch Bestimmen der niedrigsten Temperatur aller n Temperatursensoren (30, 30a - 30d) der Einführspitze (35) bestimmt wird.

20. Verfahren nach einem der vorangehenden Ansprüche, **dadurch gekennzeichnet, daß**
die Kerntemperatur T_{K} des Garguts (10) nur dann zur Regelung eines Garprogramms verwendet und/oder zum Aufzeichnen verwendet und/oder angezeigt wird, wenn sichergestellt ist, daß der kälteste Temperatursensor der Einführspitze (35) einer der m im Gargut (10) plazierten Temperatursensoren (30a, 30b) ist.

21. Verfahren nach einem der vorangehenden Ansprüche, **dadurch gekennzeichnet, daß**
über einen weiteren Sensor in oder an einem Griffstück (45) des Mehrpunkttemperatursensors (20) die Garraumtemperatur T_{G} oder die Temperatur T_{O} der oder nahe der Oberfläche des Garguts (10) erfaßt wird, die vorzugsweise beim Führen des Garprozesses berücksichtigt wird.

## Claims

1. Method for controlling a cooking process using a multipoint temperature sensor (20) which comprises an insertion tip (35) with n temperature sensors (30, 30a-30d), which are spaced apart from one another along the insertion tip (35), and is inserted by way of its insertion tip (35) at least partially into a cooking product (10), which is to be cooked in a cooking chamber (5), in such a way that m temperature sensors (30a, 30b) are positioned in the cooking product (10) and n-m temperature sensors (30c, 30d) are positioned outside the cooking product (10), where m ≤ n, m ≠ 0, n ≠ 0, n ∈ |N and m ∈ |N, with at least the core temperature T_{K} of the cooking product (10) being determined and/or displayed by evaluating output data from the n temperature sensors (30, 30a-30d), with the method comprising at least a first cooking phase during which a temperature T_{G} in the cooking chamber (5) is above at least a temperature of the cooking product (10) and the m temperature sensors (30a, 30b) of the multipoint temperature sensor (20) in the cooking product (10) and/or the temperature sensor of the multipoint temperature sensor which measures the lowest temperature in the cooking product are or is determined, in order to control the cooking process as a function of output data from the temperature sensors (30a, 30b) determined in this way or from the temperature sensor determined in this way, **characterized in that** the method additionally comprises at least a second cooking phase after the first cooking phase, during which second cooking phase the temperature T_{G} in the cooking chamber (5) falls below a temperature of the cooking product (10) and output data from the m temperature sensors (30a, 30b) of the multipoint temperature sensor (20) in the cooking product (10), which temperature sensors are determined in the first cooking phase, or from the temperature sensor of the multipoint temperature sensor (20), which temperature sensor is determined in the first cooking phase and measures the lowest temperature in the cooking product, is evaluated in order to control and/or display the cooking process.

2. Method according to Claim 1, **characterized in that** the temperature T_{G} of the cooking chamber (5) is above the core temperature T_{K} of the cooking product (10) in the first cooking phase and/or falls below the core temperature T_{K} of the cooking product (10) in the second cooking phase, with the temperature T_{G} of the cooking chamber (5) being determined preferably by the average cooking chamber temperature.

3. Method according to Claim 1 or 2, **characterized in that**
the core temperature T_{K} for calculating at least one cooking parameter, in particular the cooking duration, is determined from the output data from the m temperature sensors (30a, 30b) or from the temperature sensor which measures the lowest temperature in the cooking product.

4. Method according to one of the preceding claims,
**characterized in that**
the output data from the n temperature sensors (30, 30a-30d) of the multipoint temperature sensor (20) is detected over time at least in the first cooking phase, in particular for determining the m temperature sensors (30a, 30b) in the cooking product (10) and/or the temperature sensor which measures the lowest temperature in the cooking product and/or the core temperature T_{K}.

5. Method according to one of the preceding claims,
**characterized in that**
the output data from at least the temperature sensor which measures the lowest temperature in the cooking product in the first cooking phase, preferably the m temperature sensors (30a, 30b) which are determined as being arranged in the cooking product (10) in the first cooking phase, are detected over time at least in the second cooking phase, in particular for determining at least one cooking parameter, preferably the core temperature T_{K} and/or the cooking duration.

6. Method according to Claim 4 or 5, **characterized in that**
the behaviour over time of the output values from the m temperature sensors (30a, 30b) which are determined as being arranged in the cooking product (10) in the first cooking phase is used to determine the core temperature T_{K}, in particular by means of iteration or extrapolation.

7. Method according to Claim 6, **characterized in that** the iteration or extrapolation for determining the core temperature is performed for as long as the value for the core temperature determined from it differs by more than 1% from the lowest of the items of output data which is determined by means of the m temperature sensors (30a, 30b) in the cooking product (10).

8. Method according to one of the preceding claims,
**characterized in that**
the temperature sensor which measures the lowest temperature is determined when the temperature of at least n-1 temperature sensors in the first cooking phase rises.

9. Method according to one of the preceding claims, **characterized**
**in that** the temperature sensor which measures the lowest temperature is determined in the first cooking phase when cooking meat, fish or vegetables.

10. Method according to one of the preceding claims, **characterized in that**
the m temperature sensors (30a, 30b) arranged in the cooking product (10) are determined in the first cooking phase when cooking pastries or bakery goods, in particular bread rolls, in particular by the output data leading to temperatures below 100°C.

11. Method according to one of the preceding claims, **characterized in that**
the n-m temperature sensors (30c, 30d) which are positioned outside the cooking product (10) are evaluated in order to determine the temperature in the vicinity of the surface To of the cooking product (10).

12. Method according to Claim 10 or 11, **characterized in that**
the second cooking phase is terminated when the temperature falls below a limit value for the temperature in the vicinity of the surface To of the cooking product (10).

13. Method according to one of the preceding claims, **characterized in that**
the second cooking phase is followed by a third cooking phase in which the cooking chamber temperature T_{G} rises above the temperature of the cooking product (10).

14. Method according to Claim 13, **characterized in that**
the cooking chamber temperature T_{G} rises above the core temperature T_{K} and/or the surface temperature To of the cooking product (10) in the third cooking phase.

15. Method according to one of the preceding claims, **characterized in that**
the cooking chamber temperature T_{G} is increased during the second cooking phase in order to determine the core temperature T_{K} of the cooking product (10) in an intermediate cooking phase.

16. Method according to Claim 15, **characterized in that**
the cooking method is restarted in the second cooking phase after the core temperature T_{K} of the cooking product (10) is determined in the intermediate cooking phase.

17. Method according to Claim 15 or 16, **characterized in that**
the cooking chamber temperature T_{G} is increased in the intermediate cooking phase at least above a desired core temperature to be reached.

18. Method according to one of the preceding claims, **characterized in that**
the cooking chamber temperature T_{G} is increased in the intermediate cooking phase for a certain period of time at least to such an extent that it is possible to ensure that the temperatures of the n-m temperature sensors (30c, 30d) which are positioned outside the cooking product (10) are above the temperature of the coldest of the m temperature sensors (30a, 30b) inside the cooking product (10).

19. Method according to one of the preceding claims, **characterized in that**
the core temperature T_{K} of the cooking product (10) in the intermediate cooking phase is determined by determining the lowest temperature of all n temperature sensors (30, 30a-30d) of the insertion tip (35).

20. Method according to one of the preceding claims, **characterized in that**
the core temperature T_{K} of the cooking product (10) is used to regulate a cooking program and/or is used for recording purposes and/or is displayed only when it is ensured that the coldest temperature sensor of the insertion tip (35) is one of the m temperature sensors (30a, 30b) positioned in the cooking product (10).

21. Method according to one of the preceding claims, **characterized in that**
the cooking chamber temperature T_{G} or the temperature To of the or in the vicinity of the surface of the cooking product (10), which temperature is preferably taken into account when controlling the cooking process, is detected by means of a further sensor in or on a handle (45) of the multipoint temperature sensor (20).

## Revendications

1. Procédé pour mettre en oeuvre un cycle de cuisson avec un capteur de température multipoint (20), qui comprend une pointe d'introduction (35) avec n capteurs de température (30, 30a à 30d) espacés les uns des autres le long de la pointe d'introduction (35), et qui est introduit par sa pointe d'introduction (35) au moins partiellement dans un produit à cuire (10) devant être cuit dans un compartiment de cuisson (5), de sorte que m capteurs de température (30a, 30b) sont placés dans le produit à cuire (10) et n - m capteurs de température (30c, 30d) sont placés à l'extérieur du produit à cuire (10), avec m ≤ n, m ≠ 0, n ≠ 0, n ∈ |N et m ∈ |N, au moins la température centrale T_{K} du produit à cuire (10) étant déterminée et/ou affichée grâce à une interprétation de données de sortie des n capteurs de température (30, 30a à 30d), le procédé comprenant au moins une première phase de cuisson pendant laquelle une température T_{G} dans le compartiment de cuisson (5) est supérieure à au moins une température du produit à cuire (10) et les m capteurs de température (30a, 30b) du capteur de température multipoint (20) dans le produit à cuire (10) et/ou le capteur de température du capteur de température multipoint qui mesure la température la plus basse dans le produit à cuire est/sont déterminé(s) pour mettre en oeuvre le cycle de cuisson en fonction de données de sortie des capteurs de température (30a, 30b) ainsi déterminés ou du capteur de température ainsi déterminé, **caractérisé en ce que** le procédé comprend de plus au moins une deuxième phase de cuisson après la première phase de cuisson, pendant laquelle la température T_{G} dans le compartiment de cuisson (5) tombe en dessous d'une température du produit à cuire (10) et des données de sortie des m capteurs de température (30a, 30b), déterminés dans la première phase de cuisson, du capteur de température multipoint (20) dans le produit à cuire (10) ou du capteur de température, déterminé dans la première phase de cuisson, qui mesure la température la plus basse dans le produit à cuire faisant partie du capteur de température multipoint (20), est/sont interprété(s) pour la mise en oeuvre et/ou l'affichage du cycle de cuisson.

2. Procédé selon la revendication 1, **caractérisé en ce que**
la température T_{G} du compartiment de cuisson (5) dans la première phase de cuisson est supérieure à la température centrale T_{K} du produit à cuire (10) et/ou tombe dans la deuxième phase de cuisson en dessous de la température centrale T_{K} du produit à cuire (10), la température T_{G} du compartiment de cuisson (5) étant déterminée de préférence grâce à la température moyenne de compartiment de cuisson.

3. Procédé selon la revendication 1 ou 2, **caractérisé en ce que**
la température centrale T_{K} destinée au calcul d'au moins un paramètre de cuisson, en particulier de la durée de cuisson, est déterminée à partir des données de sortie des m capteurs de température (30a, 30b) ou du capteur de température qui mesure la température la plus basse dans le produit à cuire.

4. Procédé selon l'une quelconque des revendications précédentes, **caractérisé en ce que**
les données de sortie des n capteurs de température (30, 30a à 30d) du capteur de température multipoint (20) sont enregistrées sur une période de temps au moins dans la première phase de cuisson, en particulier en vue de la détermination des m capteurs de température (30a, 30b) dans le produit à cuire (10) et/ou du capteur de température qui mesure la température la plus basse dans le produit à cuire, et/ou de la température centrale T_{K}.

5. Procédé selon l'une quelconque des revendications précédentes, **caractérisé en ce que**
les données de sortie d'au moins le capteur de température qui mesure la température la plus basse dans le produit à cuire dans la première phase de cuisson, de préférence des m capteurs de température (30a, 30b) déterminés dans la première phase de cuisson comme étant placés dans le produit à cuire (10), sont enregistrés sur une période de temps au moins dans la deuxième phase de cuisson, en particulier pour la détermination d'au moins un paramètre de cuisson, de préférence de la température centrale T_{K} et/ou de la durée de cuisson.

6. Procédé selon la revendication 4 ou 5, **caractérisé en ce que**
la température centrale T_{K}, est déterminée, en particulier par l'intermédiaire d'une itération ou une extrapolation, grâce au comportement temporel des valeurs de sortie des m capteurs de température (30a, 30b) déterminés dans la première phase de cuisson comme étant placés dans le produit à cuire (10).

7. Procédé selon la revendication 6, **caractérisé en ce que**
l'itération ou l'extrapolation destinée à la détermination de la température centrale est réalisée aussi longtemps que la valeur de la température centrale déterminée à partir de celle-ci s'écarte de la plus basse des données de sortie, déterminées dans le produit à cuire (10) par l'intermédiaire des m capteurs de température (30a, 30b), de plus de 1 %.

8. Procédé selon l'une quelconque des revendications précédentes, **caractérisé en ce que**
le capteur de température qui mesure la température la plus basse est déterminé quand la température d'au moins n - 1 capteurs de température augmente dans la première phase de cuisson.

9. Procédé selon l'une quelconque des revendications précédentes, **caractérisé en ce que**
dans le cas d'une cuisson de viandes, de poissons ou de légumes, le capteur de température qui mesure la température la plus basse est déterminé dans la première phase de cuisson.

10. Procédé selon l'une quelconque des revendications précédentes, **caractérisé en ce que**
dans le cas d'une cuisson de gâteaux ou de pâtisserie, en particulier de petits pains, les m capteurs de température (30a, 30b) placés dans le produit à cuire (10) sont déterminés dans la première phase de cuisson, en particulier du fait que les données de sortie mènent, à des températures inférieures à 100°C.

11. Procédé selon l'une quelconque des revendications précédentes, **caractérisé en ce que**
les n - m capteurs de température (30c, 30d), qui sont placés à l'extérieur du produit à cuire (10), sont interprétés pour déterminer la température à proximité de la surface T_{O} du produit à cuire (10).

12. Procédé selon la revendication 10 ou 11, **caractérisé en ce que**
la deuxième phase de cuisson est achevée lors du dépassement négatif d'une valeur limite de la température à proximité de la surface T_{O} du produit à cuire (10).

13. Procédé selon l'une quelconque des revendications précédentes, **caractérisé en ce que**
une troisième phase de cuisson, pour laquelle la température de compartiment de cuisson T_{G} augmente au-dessus de la température du produit à cuire (10), suit la deuxième phase de cuisson.

14. Procédé selon la revendication 13, **caractérisé en ce que**
la température de compartiment de cuisson T_{G} dans la troisième phase de cuisson augmente au-dessus de la température centrale T_{K} et/ou de la température de surface T_{O} du produit à cuire (10).

15. Procédé selon l'une quelconque des revendications précédentes, **caractérisé en ce que**
la température de compartiment de cuisson T_{G} pendant la deuxième phase de cuisson est augmentée pour déterminer la température centrale T_{K} du produit à cuire (10) dans une phase de cuisson intermédiaire.

16. Procédé selon la revendication 15, **caractérisé en ce que**
après la détermination de la température centrale T_{K} du produit à cuire (10) dans la phase de cuisson intermédiaire, le procédé de cuisson est à nouveau mis en oeuvre dans la deuxième phase de cuisson.

17. Procédé selon la revendication 15 ou 16, **caractérisé en ce que**
la température de compartiment de cuisson T_{G} dans la phase de cuisson intermédiaire est augmentée au moins au-dessus d'une température centrale Soll à atteindre.

18. Procédé selon l'une quelconque des revendications précédentes, **caractérisé en ce que**
la température de compartiment de cuisson T_{G} dans la phase de cuisson intermédiaire est augmentée pour quelques temps au moins suffisamment fort pour pouvoir garantir que les températures des n - m capteurs de température (30c, 30d), qui sont placés à l'extérieur du produit à cuire (10), sont supérieures à la température du plus froid des m capteurs de température (30a, 30b) à l'intérieur du produit à cuire (10).

19. Procédé selon l'une quelconque des revendications précédentes, **caractérisé en ce que**
la température centrale T_{K} du produit à cuire (10) dans la phase de cuisson intermédiaire est déterminée grâce à la détermination de la température la plus basse de tous les n capteurs de température (30, 30a à 30d) de la pointe d'introduction (35).

20. Procédé selon l'une quelconque des revendications précédentes, **caractérisé en ce que**
la température centrale T_{K} du produit à cuire (10) n'est utilisée pour la régulation d'un programme de cuisson et/ou n'est utilisée pour l'enregistrement et/ou n'est affichée, que quand il est sûr que le plus froid des capteurs de température de la pointe d'introduction (35) est un des m capteurs de température (30a, 30b) placés dans le produit à cuire (10).

21. Procédé selon l'une quelconque des revendications précédentes, **caractérisé en ce que**
la température de compartiment de cuisson T_{G} ou la température T_{O} de la surface ou de la proximité de la surface du produit à cuire (10), qui est de préférence prise en considération lors de la mise en oeuvre du cycle de cuisson, est enregistrée par l'intermédiaire d'un autre capteur dans ou au niveau d'une poignée (45) du capteur de température multipoint (20).
